(19) Europäisches Patentamt
European Patent Office
Office européen des brevets

(11) **EP 4 629 106 A1**

(12) **EUROPEAN PATENT APPLICATION**
published in accordance with Art. 153(4) EPC

(43) Date of publication:
**08.10.2025 Bulletin 2025/41**

(21) Application number: 23895686.6

(22) Date of filing: **22.02.2023**

(51) International Patent Classification (IPC):
**G06F 17/18** (2006.01)    **G06Q 50/06** (2024.01)

(86) International application number:
**PCT/CN2023/077534**

(87) International publication number:
**WO 2024/113510 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.12.2022 CN 202211535450**

(71) Applicant: **Sungrow (Shanghai) Co., Ltd
Shanghai 201203 (CN)**

(72) Inventors:
• **HU, Qiong
  Shanghai 201203 (CN)**
• **DA, Hongzhi
  Shanghai 201203 (CN)**

(74) Representative: **Prinz & Partner mbB
Patent- und Rechtsanwälte
Rundfunkplatz 2
80335 München (DE)**

(54) **METHOD AND APPARATUS FOR CALCULATING POWER GENERATION CAPACITY LOSS OF PHOTOVOLTAIC ASSEMBLY, AND ELECTRONIC DEVICE**

(57)    Provided in the present invention are a method and apparatus for calculating a power generation capacity loss of a photovoltaic assembly, and an electronic device. The method comprises: acquiring fault information of a photovoltaic assembly, and calculating an area proportion and a power generation capacity loss influence coefficient that correspond to the fault information; calculating the difference between an actual power generation capacity of a photovoltaic string in which the photovoltaic assembly is located and a theoretical power generation capacity, and taking same as a power generation capacity loss value of the photovoltaic string; according to the power generation capacity loss value of the photovoltaic string, and the area proportion and the power generation capacity loss influence coefficient that correspond to the fault information, calculating an assembly power generation capacity loss value corresponding to the fault information; and calculating a total power generation capacity loss value of the photovoltaic assembly on the basis of the assembly power generation capacity loss value. By means of the present invention, a power generation capacity loss of a photovoltaic assembly caused by a fault can be calculated, thereby solving the problem of when a photovoltaic assembly has a fault, it being necessary to determine a power generation capacity loss of the photovoltaic assembly caused by the fault in order to provide a reference for operation and maintenance work.

Acquire fault information of a photovoltaic module, and calculate an area proportion and a power generation capacity loss influence coefficient that correspond to the fault information — S11

Calculate a difference between an actual power generation capacity and a theoretical power generation capacity of a photovoltaic string at which the photovoltaic module is located, and determine the difference as a power generation capacity loss of the photovoltaic string — S12

Calculate a module power generation capacity loss corresponding to the fault information based on the power generation capacity loss of the photovoltaic string, and the area proportion and the power generation capacity loss influence coefficient that correspond to the fault information — S13

Calculate a total power generation capacity loss of the photovoltaic module based on the module power generation capacity loss — S14

**FIG. 1**

## Description

This application claims the priority to Chinese Patent Application No. 202211535450.1, titled "METHOD AND APPARATUS FOR CALCULATING POWER GENERATION CAPACITY LOSS OF PHOTOVOLTAIC ASSEMBLY, AND ELECTRONIC DEVICE", filed on December 2, 2022 with the China National Intellectual Property Administration, which is incorporated herein by reference in its entirety.

## FIELD

The present disclosure relates to the field of operation and maintenance of faulty photovoltaic modules, and in particular to a method and an apparatus for calculating a power generation capacity loss of a photovoltaic module, and an electronic device.

## BACKGROUND

With the development of the photovoltaic industry, the market capacity of the photovoltaic industry is increasing year by year. With the increasing scale of grid-connected photovoltaic power stations, operation and maintenance business will become the fastest-growing business in the future power station sector.

In operation of a solar photovoltaic power station, photovoltaic modules may fail due to damage to solar cells, cells from cracks to breakage, deterioration of cell performances, the presence of obstructions such as birds, dust, and fallen leaves that fall over long-term use (where these obstructions may form hot spot effects on the photovoltaic modules).

In a case of a photovoltaic module failing, how to determine a power generation capacity loss of the photovoltaic module caused by faults to provide a reference for operation and maintenance is a technical problem to be urgently solved by those skilled in the art.

## SUMMARY

A method and an apparatus for calculating a power generation capacity loss of a photovoltaic module, and an electronic device are provided according to the present disclosure, to solve the problem of determining a power generation capacity loss of the photovoltaic module caused by faults to provide a reference for operation and maintenance when the photovoltaic module fails.

A method for calculating a power generation capacity loss of a photovoltaic module, includes: acquiring fault information of the photovoltaic module, and calculating an area proportion and a power generation capacity loss influence coefficient that correspond to the fault information; calculating a difference between an actual power generation capacity and a theoretical power generation capacity of a photovoltaic string at which the photovoltaic module is located, and determining the difference as a power generation capacity loss of the photovoltaic string; calculating a module power generation capacity loss corresponding to the fault information based on the power generation capacity loss of the photovoltaic string, and the area proportion and the power generation capacity loss influence coefficient that correspond to the fault information; and calculating a total power generation capacity loss of the photovoltaic module based on the module power generation capacity loss.

In an embodiment, the fault information includes a fault type and fault cell information corresponding to the fault type, and the fault cell information includes a fault cell number and a fault cell position. The calculating an area proportion corresponding to the fault information includes: acquiring structure information of the photovoltaic module; calculating a module area proportion of a fault cell corresponding to the fault type to the photovoltaic module based on the structure information of the photovoltaic module, the fault type and the fault cell information; and determining a string area proportion corresponding to the fault type based on the module area proportion.

In an embodiment, the determining a string area proportion corresponding to the fault type based on the module area proportion includes: acquiring structure information of the photovoltaic string at which the photovoltaic module is located; calculating a sub-area proportion of the fault cell corresponding to the fault type in the photovoltaic module to the photovoltaic string based on the module area proportion and the structure information of the photovoltaic string; acquiring a sum of all sub-area proportions corresponding to the fault type in the photovoltaic string; and determining a ratio of the sub-area proportion to the sum of all the sub-area proportions as the string area proportion corresponding to the fault type.

In an embodiment, the calculating a power generation capacity loss influence coefficient corresponding to the fault information includes: acquiring temperature information of all pixels in images of all fault cells corresponding to the fault type in the photovoltaic string; calculating an average value of the temperature information of all the pixels as average temperature information corresponding to the fault type; acquiring a sum of average temperature information corresponding to all fault types in the photovoltaic string; and determining a ratio of the average temperature information corresponding to the fault type to the sum of the average temperature information as the power generation capacity loss influence coefficient corresponding to the fault type.

In an embodiment, the calculating a module power generation capacity loss corresponding to the fault information based on the power generation capacity loss of the photovoltaic string, and the area proportion and the power generation capacity loss influence coefficient that correspond to the fault information includes: calculating a product of the power generation capacity loss of the photovoltaic string and the power generation capacity loss influence coefficient as a sub power generation capacity loss of the photovoltaic string having a power generation capacity loss corresponding to the fault type; and determining a product of the sub power generation capacity loss and the string area proportion as the module power generation capacity loss of the photovoltaic string having the power generation capacity loss corresponding to the fault type.

In an embodiment, the calculating a total power generation capacity loss of the photovoltaic module based on the module power generation capacity loss includes: determining a sum of all module power generation capacity losses corresponding to the photovoltaic module as the total power generation capacity loss of the photovoltaic module.

In an embodiment, after calculating the total power generation capacity loss of the photovoltaic module, the method further includes: outputting a prompt message of replacing the photovoltaic module in a case that the total power generation capacity loss of the photovoltaic module is greater than a preset loss threshold.

In an embodiment, the method, in a case that the total power generation capacity loss of the photovoltaic module is not greater than the preset loss threshold, further includes: calculating a power generation capacity gain of the photovoltaic module after a predetermined operation and a cost of the predetermined operation, where the predetermined operation includes a replacement operation or a maintenance operation; and outputting a prompt message of performing the predetermined operation in a case that the power generation capacity gain is greater than the cost of the predetermined operation.

An apparatus for calculating a power generation capacity loss of a photovoltaic module includes: a data calculation module, a first loss calculation module, a second loss calculation module, and a third loss calculation module. The data calculation module is configured to acquire fault information of a photovoltaic module and calculate an area proportion and a power generation capacity loss influence coefficient that correspond to the fault information. The first loss calculation module is configured to calculate a difference between an actual power generation capacity and a theoretical power generation capacity of a photovoltaic string at which the photovoltaic module is located and determine the difference as a power generation capacity loss of the photovoltaic string. The second loss calculation module is configured to calculate a module power generation capacity loss corresponding to the fault information based on the power generation capacity loss of the photovoltaic string, and the area proportion and the power generation capacity loss influence coefficient that correspond to the fault information. The third loss calculation module is configured to calculate a total power generation capacity loss of the photovoltaic module based on the module power generation capacity loss.

An electronic device includes: a memory and a processor. The memory stores a program. The processor is configured to excuse the program to perform the method for calculating a power generation capacity loss of a photovoltaic module described above.

Compared to the conventional technology, following beneficial effects can be achieved by the present disclosure.

A method and an apparatus for calculating a power generation capacity loss of a photovoltaic module, and an electronic device are provided according to the present disclosure. Fault information of the photovoltaic module is acquired, and an area proportion and a power generation capacity loss influence coefficient that correspond to the fault information are calculated. A difference between an actual power generation capacity and a theoretical power generation capacity of a photovoltaic string at which the photovoltaic module is located is calculated as a power generation capacity loss of the photovoltaic string. A module power generation capacity loss corresponding to the fault information is calculated based on the power generation capacity loss of the photovoltaic string, and the area proportion and the power generation capacity loss influence coefficient that correspond to the fault information. A total power generation capacity loss of the photovoltaic module is calculated based on the module power generation capacity loss. With the present disclosure, the power generation capacity loss of the photovoltaic module caused by faults can be calculated, thereby solving the problem of determining a power generation capacity loss of the photovoltaic module caused by faults to provide a reference for operation and maintenance when the photovoltaic module fails.

**BRIEF DESCRIPTION OF THE DRAWINGS**

Hereinafter, drawings to be applied in embodiments of the present disclosure or in the conventional technology are briefly described to illustrate technical solutions according to embodiments of the present disclosure or in the conventional technology clearly. Apparently, the drawings in the following descriptions only show some embodiments of the present disclosure, and other drawings may be obtained by those skilled in the art based on the provided drawings without any creative effort.

FIG. 1 is a flowchart of a method for calculating a power generation capacity loss of a photovoltaic module according to an embodiment of the present disclosure;

FIG. 2 is a flowchart of calculating an area proportion according to an embodiment of the present disclosure;

FIG. 3 is a flowchart of calculating a power generation capacity loss influence coefficient according to an embodiment of the present disclosure; and

FIG. 4 is a schematic structural diagram of an apparatus for calculating a power generation capacity loss of a photovoltaic module according to an embodiment of the present disclosure.

## DETAILED DESCRIPTION

The technical solutions is the embodiments of the present disclosure are to be described clearly and completely as follows in conjunction with the drawings in the embodiments of the present disclosure. It is apparent that the described embodiments are only some of the embodiments of the present disclosure, rather than all the embodiments. All other embodiments obtained by those skilled in the art based on the embodiments of the present disclosure without any creative work fall within the protection scope of the present disclosure.

With increasing investments in the development and research of clean and renewable energy in various countries around the world, the photovoltaic industry based on solar energy is developing rapidly. At present, the scale of the photovoltaic industry in China is expanding, and the development of the industry is improving.

With the development of the photovoltaic industry, the market capacity of the photovoltaic industry is increasing year by year. With the increasing scale of grid-connected photovoltaic power stations, operation and maintenance business will become the fastest-growing business in the future power station sector.

In operation of a solar photovoltaic power station, photovoltaic modules may fail due to damage to solar cells, cells from cracks to breakage, deterioration of cell performances, the presence of obstructions such as birds, dust, and fallen leaves that fall over long-term use (where these obstructions may form hot spot effects on the photovoltaic modules).

Photovoltaic power stations in China are generally built on large mountain slopes, deserts, plains, swamps, water bodies, factory roofs, residential roofs, and the like. Different photovoltaic power stations have significant differences in scale, form, distribution, and the like, resulting in many inconvenience in later operation, maintenance and inspection processes. Especially, a photovoltaic power generation project with a larger scale indicates a higher complexity in inspecting power stations. In inspecting such power stations, the conventional manual inspection requires a lot of labor and time costs, resulting in delayed power station equipment inspection and affecting the economic benefits of the power stations. Furthermore, the manual inspection carries certain risks.

At present, in operation and maintenance of the power stations, infrared camera devices carried by unmanned aerial vehicles capture infrared images of photovoltaic modules, and then it is determined whether the photovoltaic modules have faults and the types of the faults by performing detection based on image analysis.

Although the inspection with unmanned aerial vehicles on the power stations may locate the faulty module that actually fails, a quantitative power generation capacity loss of the photovoltaic module caused by the fault cannot be provided, and only limited reference information can be provided for the formulation of operation and maintenance strategies. Operation and maintenance personnel cannot determine accurate operation and maintenance strategies, and often need to manually investigate the severity of the fault of the photovoltaic module on site, which increases the workload of the operation and maintenance personnel.

Therefore, in a case of a photovoltaic module failing, how to determine a power generation capacity loss of the photovoltaic module caused by faults is a technical problem to be urgently solved by those skilled in the art, to provide an accurate reference for operation and maintenance decisions and guide operation and maintenance efficiently.

Therefore, a method and an apparatus for calculating a power generation capacity loss of a photovoltaic module, and an electronic device are provided according to the present disclosure. Fault information of the photovoltaic module is acquired, and an area proportion and a power generation capacity loss influence coefficient that correspond to the fault information are calculated. A difference between an actual power generation capacity and a theoretical power generation capacity of a photovoltaic string at which the photovoltaic module is located is calculated as a power generation capacity loss of the photovoltaic string. A module power generation capacity loss corresponding to the fault information is calculated based on the power generation capacity loss of the photovoltaic string, and the area proportion and the power generation capacity loss influence coefficient that correspond to the fault information. A total power generation capacity loss of the photovoltaic module is calculated based on the module power generation capacity loss. With the present disclosure, the power generation capacity loss of the photovoltaic module caused by faults can be calculated, thereby solving the problem of determining a power generation capacity loss of the photovoltaic module caused by faults to provide a reference for operation and maintenance when the photovoltaic module fails.

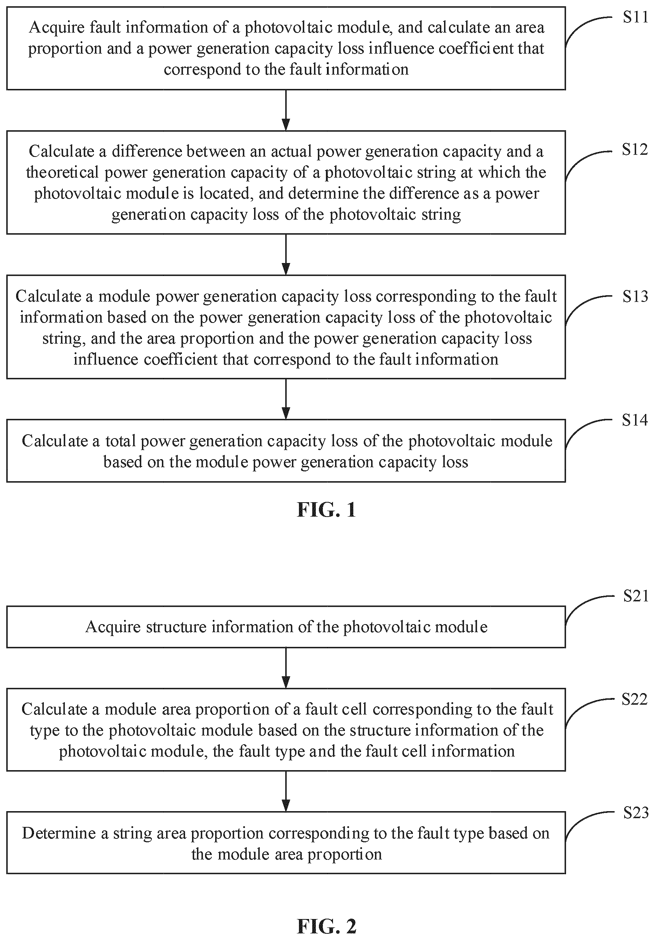

Based on the above contents, a method for calculating a power generation capacity loss of a photovoltaic module is provided according to an embodiment of the present disclosure. Referring to FIG. 1, the method may include the following steps S11 to S14.

In S11, fault information of the photovoltaic module is acquired, and an area proportion and a power generation capacity loss influence coefficient that correspond to the fault information are calculated.

In an embodiment, infrared camera devices carried by unmanned aerial vehicles may capture infrared images of photovoltaic modules, and then it is determined whether the photovoltaic modules have faults and the types of the faults by performing detection based on image analysis. For example, a fault module and a fault type may be determined by using an AI model.

In an embodiment, the fault information of the photovoltaic module may include a fault type and fault cell information corresponding to the fault type. The fault cell information includes the number of the fault cell and the position of the fault cell. The position of the fault cell indicates the photovoltaic module on which the fault cell is located on and the specific position on the photovoltaic module.

In practical applications, multiple faulty photovoltaic modules may exist in one photovoltaic string, and multiple faults may occur in one photovoltaic module. Therefore, in calculating the power generation capacity loss of the faulty module, it is required to calculate respectively for each of fault types.

After acquiring the fault information of the photovoltaic module, an area proportion corresponding to the fault information is calculated. The area proportion includes a module area proportion and a string area proportion.

The module area proportion refers to an area proportion of the fault cell corresponding to the fault type to the photovoltaic module.

The string area proportion refers to an area proportion of the fault cell corresponding to the fault type in the photovoltaic module to a total fault area corresponding to the fault type of the photovoltaic string where the photovoltaic module is located.

Specifically, referring to FIG. 2, the area proportion corresponding to the fault information may be calculated by performing the following steps S21 to S23.

In S21, structure information of the photovoltaic module is acquired.

For example, in practical applications, photovoltaic cells are usually connected in series to form groups, and then the groups are connected in parallel to form a photovoltaic module. Moreover, based on the process design of the photovoltaic modules, photovoltaic cells connected in series in a same group affect each other in the power generation capacity, and the photovoltaic cells connected in parallel do not affect each other in the power generation capacity.

Therefore, in determining the power generation capacity loss of the photovoltaic module, it is required to acquire the structure information of the photovoltaic module to determine how many photovoltaic cells are connected in series in the photovoltaic module and how many photovoltaic cells are connected in parallel in the photovoltaic module, so as to determine how many photovoltaic cells are to be affected in power generation due to faults.

In S22, a module area proportion of a fault cell corresponding to the fault type to the photovoltaic module is calculated based on the structure information of the photovoltaic module, the fault type and the fault cell information.

Specifically, based on the structure information of the photovoltaic module, the fault type and the fault cell information, a coverage ratio of faults is calculated. That is, a module area proportion $S_{ij}$ corresponding to each of fault types is calculated, where i represents a fault type and j represents a photovoltaic module.

For example, it is assumed that a photovoltaic module includes 10*6 (60) photovoltaic cells connected in series and parallel, that is, every 10 photovoltaic cells are connected in series to form a group and then 6 groups are connected in parallel. In a case that a type of fault affects three photovoltaic cell groups connected in parallel, the area proportion corresponding to this fault type is 3/6. In a case that a type of fault affects 5 cells and all the 5 cells exist in a same photovoltaic cell group, the area proportion corresponding to this fault type is 1/6.

In S23, a string area proportion corresponding to the fault type is determined based on the module area proportion.

Specifically, the step S23 may include the following steps (1) to (4).

In step (1), structure information of the photovoltaic string in which the photovoltaic module is located is acquired.

For example, a photovoltaic string generally includes photovoltaic modules connected in series, such as 22 photovoltaic modules connected in series, so the structure information of the photovoltaic string in which the photovoltaic module is located is a series-connection manner of the photovoltaic module.

In step (2), a sub-area proportion of the fault cell corresponding to the fault type in the photovoltaic module to the photovoltaic string is calculated based on the module area proportion and the structure information of the photovoltaic string.

For example, a fault type 1 exists on two photovoltaic modules (a photovoltaic module 1 and a photovoltaic module 2) in a photovoltaic string, and a module area proportion of the fault type 1 on the photovoltaic module 1 is 0.3. In a case that the photovoltaic string includes 20 photovoltaic modules connected in series, the proportion of the photovoltaic module corresponding to the fault cell of the fault type 1 to the photovoltaic string is 1/20 and the sub-area proportion is obtained by 0.3*1/20=0.015.

The module area proportion of the fault type 1 on the photovoltaic module 2 is 0.2, and the sub-area proportion is obtained by 0.2*1/20=0.01.

In step (3), a sum of all sub-area proportions corresponding to the fault type in the photovoltaic string is acquired.

In a case that only the photovoltaic module 1 and the photovoltaic module 2 in the photovoltaic string have the fault corresponding to the fault type 1, the sum of all sub-area proportions corresponding to the fault type in the photovoltaic string may be expressed as: $S_i$ =0.015+0.01=0.025, where i represents the fault type.

In step (4), a ratio of the sub-area proportion to the sum of all the sub-area proportions is determined as the string area proportion corresponding to the fault type.

Specifically, the string area proportion $P_{ij}$=0.015/0.025.

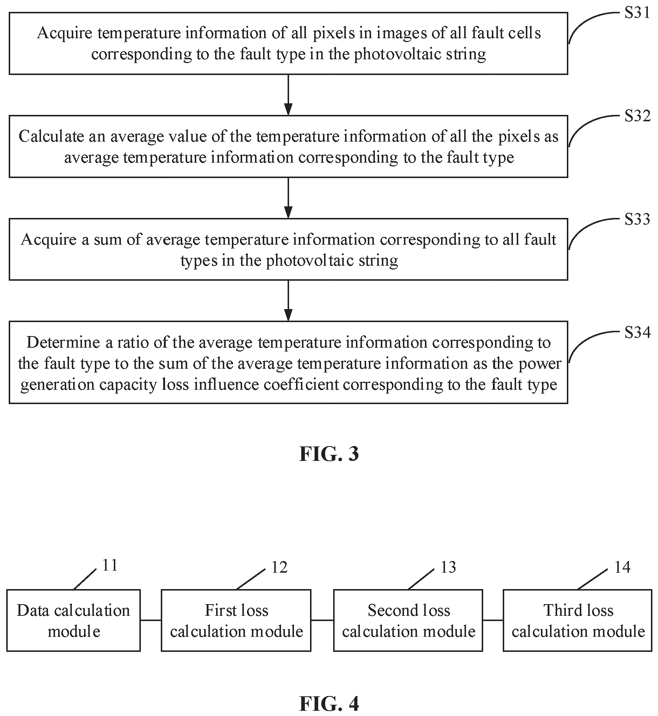

After calculating the area proportion corresponding to the fault information, the power generation capacity loss influence coefficient corresponding to the fault information is calculated. Specifically, referring to FIG. 3, the power generation capacity loss influence coefficient corresponding to the fault information may be calculated by performing the following steps S31 to S34.

In S31, temperature information of all pixels in images of all fault cells corresponding to the fault type in the photovoltaic string is acquired.

Specifically, the infrared images collected by the unmanned aerial vehicles in inspection may carry temperature information, which may be temperature values, of the photovoltaic modules. In the embodiment, temperature values of all the pixels in the images of all the fault cells corresponding to the fault type in the photovoltaic string are acquired.

In S32, an average value of the temperature information of all the pixels is calculated as average temperature information corresponding to the fault type.

The average temperature information generally refers to an average temperature value. Based on the average temperature value, a power generation capacity loss influence coefficient caused by a type of fault may be calculated.

An average temperature value $T_i$ corresponding to a fault type is equal to an average value of temperature values of all pixels, where i represents the fault type.

In S33, a sum of average temperature information corresponding to all fault types in the photovoltaic string is acquired.

Specifically, at least one fault type may exist in the photovoltaic string, so the sum $\sum T_i$ of the average temperature information corresponding to all fault types is calculated.

In S34, a ratio of the average temperature information corresponding to the fault type to the sum of the average temperature information is determined as the power generation capacity loss influence coefficient corresponding to the fault type.

Specifically, a power generation capacity loss influence coefficient corresponding to a fault type may be expressed as: $W_i = T_i/\sum T_i$, where i represents the fault type.

The power generation capacity loss influence coefficient is an influence coefficient for a power generation capacity loss caused by a fault type on the power generation loss of the photovoltaic string.

In S12, a difference between an actual power generation capacity and a theoretical power generation capacity of a photovoltaic string at which the photovoltaic module is located is calculated as a power generation capacity loss of the photovoltaic string.

Specifically, the power station usually obtains an actual power generation capacity of the entire photovoltaic string. Based on the radiation, temperature, module efficiency and other information at the corresponding time of the actual power generation capacity, a theoretical power generation capacity of the photovoltaic string under the same condition is evaluated and calculated. The difference between the theoretical power generation capacity and the actual power generation capacity is determined as the power generation capacity loss L of the photovoltaic string caused by faults.

In S13, a module power generation capacity loss corresponding to the fault information is calculated based on the power generation capacity loss of the photovoltaic string, and the area proportion and the power generation capacity loss influence coefficient that correspond to the fault information.

In practical applications, the module power generation capacity loss corresponding to the fault information refers to a power generation capacity loss of the photovoltaic module caused by a type of fault.

The module power generation capacity loss corresponding to the fault information is calculated by performing the following steps (1) and (2).

In step (1), a product of the power generation capacity loss of the photovoltaic string and the power generation capacity loss influence coefficient is calculated as a sub power generation capacity loss of the photovoltaic string having a power generation capacity loss corresponding to the fault type.

In an embodiment, the sub power generation capacity loss of the photovoltaic string having the power generation capacity loss corresponding to the fault type is expressed as $L_i=L*W_i$, where L represents the power generation capacity loss of the photovoltaic string, and $W_i$, represents the power generation capacity loss influence coefficient corresponding to the fault type.

In step (2), a product of the sub power generation capacity loss and the string area proportion is determined as the module power generation capacity loss of the photovoltaic string having the power generation capacity loss corresponding to the fault type.

Specifically, based on power generation capacity losses of the photovoltaic string corresponding to all types of faults and string area proportions of the photovoltaic string corresponding to all fault types, the module power generation capacity loss may be calculated by using the following equation:

$$F_{ij} = P_{ij} * L_i$$

where i represents a fault type, and j represents a photovoltaic module.

In S14, a total power generation capacity loss of the photovoltaic module is calculated based on the module power generation capacity loss.

Specifically, through the above steps, the module power generation capacity loss of the photovoltaic module corresponding to each fault type is obtained. A photovoltaic module may have multiple faults, so a sum of all module power generation capacity losses corresponding to the photovoltaic module is determined as the total power generation capacity loss of the photovoltaic module according to the specific fault situation in the photovoltaic module, where the total power generation capacity loss of the photovoltaic module may be expressed as $A_j = \sum F_{ij}$.

In another embodiment of the present disclosure, it may be comprehensively evaluated whether to repair or replace the photovoltaic module based on the proportion of the power generation capacity loss of the photovoltaic module, the operation and maintenance costs, the power generation capacity gain and benefit, and the like, to determine a reasonable operation and maintenance strategy.

Specifically, after calculating the total power generation capacity loss of the photovoltaic module, a prompt message of replacing the photovoltaic module is outputted in a case that the total power generation capacity loss of the photovoltaic module is greater than a preset loss threshold.

Specifically, the preset loss threshold may be set according to actual scenarios. In a case that the total power generation capacity loss of the photovoltaic module is greater than the preset loss threshold, it indicates that the total power generation capacity loss of the photovoltaic module is large and the photovoltaic module may be replaced, then a prompt message of replacing the photovoltaic module may be outputted to the maintenance personnel's terminal to notify the maintenance personnel to replace the photovoltaic module in time.

In a case that the total power generation capacity loss of the photovoltaic module is not greater than the preset loss threshold, a power generation capacity gain of the photovoltaic module after a predetermined operation and a cost of the predetermined operation are calculated. The predetermined operation includes a replacement operation or a maintenance operation. A prompt message of performing the predetermined operation is outputted in a case that the power generation capacity gain is greater than the cost of the predetermined operation.

Specifically, in the case that the total power generation capacity loss of the photovoltaic module is not greater than the preset loss threshold, it indicates that the power generation capacity loss of the photovoltaic module caused by the fault is within a controllable range, and the replacement or maintenance of the photovoltaic module may lead to a certain power generation capacity gain. Only in a case that the power generation capacity gain is greater than a corresponding operation and maintenance cost for replacing or maintaining the photovoltaic module, the replacement or maintenance of the photovoltaic module is considered. Therefore, the prompt message of performing the predetermined operation is outputted only in the case that the power generation capacity gain is greater than the cost of the predetermined operation.

In the embodiments, fault information of the photovoltaic module is acquired, and an area proportion and a power generation capacity loss influence coefficient that correspond to the fault information are calculated. A difference between an actual power generation capacity and a theoretical power generation capacity of a photovoltaic string at which the photovoltaic module is located is calculated as a power generation capacity loss of the photovoltaic string. A module power generation capacity loss corresponding to the fault information is calculated based on the power generation capacity loss of the photovoltaic string, and the area proportion and the power generation capacity loss influence coefficient that correspond to the fault information. A total power generation capacity loss of the photovoltaic module is calculated based on the module power generation capacity loss. With the present disclosure, the power generation capacity loss of the photovoltaic module caused by faults can be calculated, thereby solving the problem of determining a power generation capacity loss of the photovoltaic module caused by faults to provide a reference for operation and maintenance when the photovoltaic module fails.

In addition, according to the present disclosure, the proportion of the power generation capacity loss of the faulty module after the unmanned aerial vehicle inspection may be quantitatively evaluated, to provide an effective reference for determine a reasonable operation and maintenance strategy.

Furthermore, based on the above embodiments of the method for calculating a power generation capacity loss of a photovoltaic module, an apparatus for calculating a power generation capacity loss of a photovoltaic module is provided according to another embodiment of the present disclosure. Referring to FIG. 4, the apparatus includes: a data calculation module 11, a first loss calculation module 12, a second loss calculation module 13 and a third loss calculation module 14.

The data calculation module 11 is configured to acquire fault information of a photovoltaic module and calculate an area proportion and a power generation capacity loss influence coefficient that correspond to the fault information.

The first loss calculation module 12 is configured to calculate a difference between an actual power generation capacity and a theoretical power generation capacity of a photovoltaic string at which the photovoltaic module is located and determine the difference as a power generation capacity loss of the photovoltaic string.

The second loss calculation module 13 is configured to calculate a module power generation capacity loss corresponding to the fault information based on the power generation capacity loss of the photovoltaic string, and the area proportion and the power generation capacity loss influence coefficient that correspond to the fault information.

The third loss calculation module 14 is configured to calculate a total power generation capacity loss of the photovoltaic module based on the module power generation capacity loss.

Further, the fault information includes a fault type and fault cell information corresponding to the fault type. The fault cell information includes a fault cell number and a fault cell position.

The data calculation module 11 includes: an information acquisition sub-module, a first proportion calculation sub-module, and a second proportion calculation sub-module.

The information acquisition sub-module is configured to acquire structure information of the photovoltaic module.

The first proportion calculation sub-module is configured to calculate a module area proportion of a fault cell corresponding to the fault type to the photovoltaic module based on the structure information of the photovoltaic module, the fault type and the fault cell information.

The second proportion calculation sub-module is configured to determine a string area proportion corresponding to the fault type based on the module area proportion.

Further, the second proportion calculation sub-module includes: an information acquisition unit, a first proportion calculation unit, a proportion sum acquisition unit, and a second proportion calculation unit.

The information acquisition unit is configured to acquire structure information of the photovoltaic string at which the photovoltaic module is located.

The first proportion calculation unit is configured to calculate a sub-area proportion of the fault cell corresponding to the fault type in the photovoltaic module to the photovoltaic string based on the module area proportion and the structure information of the photovoltaic string.

The proportion sum acquisition unit is configured to acquire a sum of all sub-area proportions corresponding to the fault type in the photovoltaic string.

The second proportion calculation unit is configured to determine a ratio of the sub-area proportion to the sum of all the sub-area proportions as the string area proportion corresponding to the fault type.

Further, the data calculation module 11 includes: a first temperature acquisition sub-module, a temperature calculation sub-module, a second temperature acquisition sub-module, and a coefficient determination sub-module.

The first temperature acquisition sub-module is configured to acquire temperature information of all pixels in images of all fault cells corresponding to the fault type in the photovoltaic string.

The temperature calculation sub-module is configured to calculate an average value of the temperature information of all the pixels as average temperature information corresponding to the fault type.

The second temperature acquisition sub-module is configured to acquire a sum of average temperature information corresponding to all fault types in the photovoltaic string.

The coefficient determination sub-module is configured to determine a ratio of the average temperature information corresponding to the fault type to the sum of the average temperature information as the power generation capacity loss influence coefficient corresponding to the fault type.

Further, the second loss calculation module 13 is configured to: calculate a product of the power generation capacity loss of the photovoltaic string and the power generation capacity loss influence coefficient as a sub power generation capacity loss of the photovoltaic string having a power generation capacity loss corresponding to the fault type; and determine a product of the sub power generation capacity loss and the string area proportion as the module power generation capacity loss of the photovoltaic string having the power generation capacity loss corresponding to the fault type.

Further, the third loss calculation module 14 is configured to: determine a sum of all module power generation capacity losses corresponding to the photovoltaic module as the total power generation capacity loss of the photovoltaic module.

Further, the apparatus includes a first information output module. The first information output module is configured to: output a prompt message of replacing the photovoltaic module in a case that the total power generation capacity loss of the photovoltaic module is greater than a preset loss threshold.

Further, the apparatus includes: a data calculation module and a second information output module.

The data calculation module is configured, in a case that the total power generation capacity loss of the photovoltaic module is not greater than the preset loss threshold, to calculate a power generation capacity gain of the photovoltaic module after a predetermined operation and a cost of the predetermined operation. The predetermined operation includes a replacement operation or a maintenance operation.

The second information output module is configured, in a case that the power generation capacity gain is greater than the cost of the predetermined operation, to output a prompt message of performing the predetermined operation.

In the embodiments, fault information of the photovoltaic module is acquired, and an area proportion and a power generation capacity loss influence coefficient that correspond to the fault information are calculated. A difference between an actual power generation capacity and a theoretical power generation capacity of a photovoltaic string at which the photovoltaic module is located is calculated as a power generation capacity loss of the photovoltaic string. A module power generation capacity loss corresponding to the fault information is calculated based on the power generation capacity loss of the photovoltaic string, and the area proportion and the power generation capacity loss influence coefficient that correspond to the fault information. A total power generation capacity loss of the photovoltaic module is calculated based on the module power generation capacity loss. With the present disclosure, the power generation capacity loss of the photovoltaic module caused by faults can be calculated, thereby solving the problem of determining a power generation capacity loss of the photovoltaic module caused by faults to provide a reference for operation and maintenance when the photovoltaic module fails.

It should be noted that, the operation processes of the modules, the sub-modules, and the units in the embodiments may refer to corresponding descriptions in the above embodiments, and are not repeated herein.

Further, based on the above embodiments of the method and the apparatus for calculating a power generation capacity loss of a photovoltaic module, an electronic device is provided according to another embodiment of the present disclosure. The electronic device includes a memory and a processor. The memory stores a program. The processor is configured to execute the program to perform the method for calculating a power generation capacity loss of a photovoltaic module.

In the embodiments, fault information of the photovoltaic module is acquired, and an area proportion and a power generation capacity loss influence coefficient that correspond to the fault information are calculated. A difference between an actual power generation capacity and a theoretical power generation capacity of a photovoltaic string at which the photovoltaic module is located is calculated as a power generation capacity loss of the photovoltaic string. A module power generation capacity loss corresponding to the fault information is calculated based on the power generation capacity loss of the photovoltaic string, and the area proportion and the power generation capacity loss influence coefficient that correspond to the fault information. A total power generation capacity loss of the photovoltaic module is calculated based on the module power generation capacity loss. With the present disclosure, the power generation capacity loss of the photovoltaic module caused by faults can be calculated, thereby solving the problem of determining a power generation capacity loss of the photovoltaic module caused by faults to provide a reference for operation and maintenance when the photovoltaic module fails.

According to the above descriptions in the embodiments of the present disclosure, those skilled in the art can implement or practice the present disclosure. Various modifications to these embodiments are obvious to those skilled in the art, and the general principles defined herein may be implemented in other embodiments without departing from the spirit and scope of the present disclosure. Therefore, the present disclosure is not to be limited to the embodiments described herein, but should be in accordance with the broadest scope consistent with the principle and novel features disclosed herein.

**Claims**

1. A method for calculating a power generation capacity loss of a photovoltaic module, **characterized in**:

   acquiring fault information of the photovoltaic module, and calculating an area proportion and a power generation capacity loss influence coefficient that correspond to the fault information;
   calculating a difference between an actual power generation capacity and a theoretical power generation capacity of a photovoltaic string at which the photovoltaic module is located, and determining the difference as a power generation capacity loss of the photovoltaic string;
   calculating a module power generation capacity loss corresponding to the fault information based on the power generation capacity loss of the photovoltaic string, and the area proportion and the power generation capacity loss influence coefficient that correspond to the fault information; and
   calculating a total power generation capacity loss of the photovoltaic module based on the module power generation capacity loss.

2. The method according to claim 1, **characterized in that**:

   the fault information comprises a fault type and fault cell information corresponding to the fault type, and the fault cell information comprises a fault cell number and a fault cell position; and
   the calculating an area proportion corresponding to the fault information comprises:

   acquiring structure information of the photovoltaic module;
   calculating a module area proportion of a fault cell corresponding to the fault type to the photovoltaic module based on the structure information of the photovoltaic module, the fault type and the fault cell information; and
   determining a string area proportion corresponding to the fault type based on the module area proportion.

3. The method according to claim 2, **characterized in that**:
   the determining a string area proportion corresponding to the fault type based on the module area proportion comprises:

acquiring structure information of the photovoltaic string at which the photovoltaic module is located;

calculating a sub-area proportion of the fault cell corresponding to the fault type in the photovoltaic module to the photovoltaic string based on the module area proportion and the structure information of the photovoltaic string;

acquiring a sum of all sub-area proportions corresponding to the fault type in the photovoltaic string; and

determining a ratio of the sub-area proportion to the sum of all the sub-area proportions as the string area proportion corresponding to the fault type.

4. The method according to claim 2, **characterized in that**:

the calculating a power generation capacity loss influence coefficient corresponding to the fault information comprises:

acquiring temperature information of all pixels in images of all fault cells corresponding to the fault type in the photovoltaic string;

calculating an average value of the temperature information of all the pixels as average temperature information corresponding to the fault type;

acquiring a sum of average temperature information corresponding to all fault types in the photovoltaic string; and

determining a ratio of the average temperature information corresponding to the fault type to the sum of the average temperature information as the power generation capacity loss influence coefficient corresponding to the fault type.

5. The method according to claim 2, **characterized in that**:

the calculating a module power generation capacity loss corresponding to the fault information based on the power generation capacity loss of the photovoltaic string, and the area proportion and the power generation capacity loss influence coefficient that correspond to the fault information comprises:

calculating a product of the power generation capacity loss of the photovoltaic string and the power generation capacity loss influence coefficient as a sub power generation capacity loss of the photovoltaic string having a power generation capacity loss corresponding to the fault type; and

determining a product of the sub power generation capacity loss and the string area proportion as the module power generation capacity loss of the photovoltaic string having the power generation capacity loss corresponding to the fault type.

6. The method according to claim 5, **characterized in that**:

the calculating a total power generation capacity loss of the photovoltaic module based on the module power generation capacity loss comprises:

determining a sum of all module power generation capacity losses corresponding to the photovoltaic module as the total power generation capacity loss of the photovoltaic module.

7. The method according to claim 1, **characterized in that**:

after calculating the total power generation capacity loss of the photovoltaic module, the method further comprises:

outputting a prompt message of replacing the photovoltaic module in a case that the total power generation capacity loss of the photovoltaic module is greater than a preset loss threshold.

8. The method according to claim 7, **characterized in that**:

the method, in a case that the total power generation capacity loss of the photovoltaic module is not greater than the preset loss threshold, further comprises:

calculating a power generation capacity gain of the photovoltaic module after a predetermined operation and a cost of the predetermined operation, wherein the predetermined operation comprises a replacement operation or a maintenance operation; and

outputting a prompt message of performing the predetermined operation in a case that the power generation capacity gain is greater than the cost of the predetermined operation.

9. An apparatus for calculating a power generation capacity loss of a photovoltaic module, **characterized in**:

a data calculation module, configured to acquire fault information of a photovoltaic module and calculate an area proportion and a power generation capacity loss influence coefficient that correspond to the fault information;

a first loss calculation module, configured to calculate a difference between an actual power generation capacity and a theoretical power generation capacity of a photovoltaic string at which the photovoltaic module is located and determine the difference as a power generation capacity loss of the photovoltaic string;

a second loss calculation module, configured to calculate a module power generation capacity loss corresponding to the fault information based on the power generation capacity loss of the photovoltaic string, and the area proportion and the power generation capacity loss influence coefficient that correspond to the fault information; and

a third loss calculation module, configured to calculate a total power generation capacity loss of the photovoltaic module based on the module power generation capacity loss.

10. An electronic device, **characterized in**:

a memory; and
a processor, wherein
the memory stores a program, and the processor is configured to excuse the program to perform the method for calculating a power generation capacity loss of a photovoltaic module according to any one of claims 1 to 8.

Acquire fault information of a photovoltaic module, and calculate an area proportion and a power generation capacity loss influence coefficient that correspond to the fault information — S11

Calculate a difference between an actual power generation capacity and a theoretical power generation capacity of a photovoltaic string at which the photovoltaic module is located, and determine the difference as a power generation capacity loss of the photovoltaic string — S12

Calculate a module power generation capacity loss corresponding to the fault information based on the power generation capacity loss of the photovoltaic string, and the area proportion and the power generation capacity loss influence coefficient that correspond to the fault information — S13

Calculate a total power generation capacity loss of the photovoltaic module based on the module power generation capacity loss — S14

**FIG. 1**

Acquire structure information of the photovoltaic module — S21

Calculate a module area proportion of a fault cell corresponding to the fault type to the photovoltaic module based on the structure information of the photovoltaic module, the fault type and the fault cell information — S22

Determine a string area proportion corresponding to the fault type based on the module area proportion — S23

**FIG. 2**

Acquire temperature information of all pixels in images of all fault cells corresponding to the fault type in the photovoltaic string — S31

Calculate an average value of the temperature information of all the pixels as average temperature information corresponding to the fault type — S32

Acquire a sum of average temperature information corresponding to all fault types in the photovoltaic string — S33

Determine a ratio of the average temperature information corresponding to the fault type to the sum of the average temperature information as the power generation capacity loss influence coefficient corresponding to the fault type — S34

**FIG. 3**

| 11 | 12 | 13 | 14 |
|---|---|---|---|
| Data calculation module | First loss calculation module | Second loss calculation module | Third loss calculation module |

**FIG. 4**

## INTERNATIONAL SEARCH REPORT

| International application No. |
| --- |
| **PCT/CN2023/077534** |

| A. | CLASSIFICATION OF SUBJECT MATTER |
| --- | --- |

G06F17/18(2006.01)i; G06Q50/06(2012.01)n

According to International Patent Classification (IPC) or to both national classification and IPC

| B. | FIELDS SEARCHED |
| --- | --- |

Minimum documentation searched (classification system followed by classification symbols)

IPC:G06F G06Q

Documentation searched other than minimum documentation to the extent that such documents are included in the fields searched

Electronic data base consulted during the international search (name of data base and, where practicable, search terms used)

CNABS; CNTXT; CNKI; VEN; DWPI; USTXT; WOTXT; ENTXT; IEEE: 光伏, 发电, 电量, 损失, 故障, 组件, 组串, 电池片, 图像, 无人机, 影响, 占比, photovoltaic, generator, loss, fault, baffle, module, slice, image, influence, ratio, UAV, unattended

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116089790 A (SUNGROW POWER SUPPLY (SHANGHAI) CO., LTD.) 09 May 2023 (2023-05-09)<br>claims 1-10, description, paragraphs [0047]-[0153], and figures 1-4 | 1-10 |
| X | CN 114898232 A (ZHONGKE YUNSHANG (NANJING) INTELLIGENT TECHNOLOGY CO., LTD. et al.) 12 August 2022 (2022-08-12)<br>description, paragraphs [0050]-[0115], and figures 1-3 | 1-10 |
| X | CN 115169730 A (CHONGQING YUEDA NEW ENERGY CO., LTD.) 11 October 2022 (2022-10-11)<br>description, paragraphs [0042]-[0064], and figure 1 | 1-10 |
| A | CN 108964606 A (SHANGHAI ELECTRIC DISTRIBUTED ENERGY TECHNOLOGY CO., LTD.) 07 December 2018 (2018-12-07)<br>entire document | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 June 2023** | **10 July 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| PCT/CN2023/077534 |

| Patent document cited in search report | | | Publication date (day/month/year) | Patent family member(s) | | | Publication date (day/month/year) |
|---|---|---|---|---|---|---|---|
| CN | 116089790 | A | 09 May 2023 | None | | | |
| CN | 114898232 | A | 12 August 2022 | None | | | |
| CN | 115169730 | A | 11 October 2022 | None | | | |
| CN | 108964606 | A | 07 December 2018 | CN | 108964606 | B | 20 December 2019 |

Form PCT/ISA/210 (patent family annex) (July 2022)

**REFERENCES CITED IN THE DESCRIPTION**

**Patent documents cited in the description**

- CN 202211535450